# EUROPEAN PATENT SPECIFICATION

(11) **EP 1 701 867 B1**
(45) Date of publication and mention of the grant of the patent: **08.07.2015**
(21) Application number: 05700702.3
(22) Date of filing: 05.01.2005
(51) Int. Cl.: B60R 13/08, B64C 1/40

(54) **INSULATION STRUCTURE FOR THE INTERNAL INSULATION OF A VEHICLE**
ISOLATIONSSTRUKTUR FÜR DIE INNENISOLIERUNG EINES FAHRZEUGS
STRUCTURE D'ISOLATION POUR L'ISOLATION INTERNE D'UN VEHICULE

(30) Priority: 05.01.2004 DE 102004001081; 09.08.2004 US 600108 P
(43) Date of publication of application: 20.09.2006
(73) Proprietor: Airbus Operations GmbH, 21129 Hamburg (DE)
(72) Inventor: MÜLLER, Rainer, 21224 Rosengarten (DE); TURANSKI, Peter, 27305 Süstedt (DE); OESTEREICH, Wilko, 28857 Syke-Barrien (DE); REINELT, Thorsten, 28205 Bremen (DE)
(74) Representative: Kopf, Korbinian Paul
(86) International application number: PCT/EP2005/000039
(87) International publication number: WO 2005/068258

(56) References cited:
- WO-A-02/098707
- DE-U1- 8 812 026
- US-A- 3 811 997
- US-A- 5 240 527
- PATENT ABSTRACTS OF JAPAN vol. 2003, no. 02, 5 February 2003 (2003-02-05) & JP 2002 283485 A (NICHIAS CORP), 3 October 2002 (2002-10-03)
- PATENT ABSTRACTS OF JAPAN vol. 2000, no. 23, 10 February 2001 (2001-02-10) & JP 2001 171030 A (TOKIWA ELECTRIC CO LTD), 26 June 2001 (2001-06-26)
- PATENT ABSTRACTS OF JAPAN vol. 014, no. 237 (M-0976), 21 May 1990 (1990-05-21) & JP 02 062500 A (IMAE KOGYO KK; others: 02), 2 March 1990 (1990-03-02)
- PATENT ABSTRACTS OF JAPAN vol. 1996, no. 02, 29 February 1996 (1996-02-29) & JP 07 269777 A (DAIDO STEEL SHEET CORP), 20 October 1995 (1995-10-20)

## Description

### FIELD OF THE INVENTION

The present invention relates to an insulation. In particular, the present invention relates to an insulation structure for the internal insulation of a vehicle such as the encapsulated glass fiber insulation blanket of document US-5,240,527 A1. The insulation structure is useful for protecting the internal region of a vehicle from a fire incursion from outside the vehicle surroundings, so that evacuation of the passengers from the vehicle may be made easier.

### BACKRGOUND OF THE INVENTION

Conventional insulation systems essentially comprise a core material, which is embedded in an insulation package, and an envelope. The core and insulation materials used generally include products of the fiber industry, of which fiber glass materials (glass wool) are used in particular. This material fulfils the requirements in regard to thermal and acoustic insulation. In order to implement mounting (attachment) of the relatively amorphous semi finished products to the vehicle structure, the insulation package (comprising these semi finished products) is enclosed by an envelope film. Reinforcements are attached to the ends of the envelope film in order to thus attach a (therefore complete) insulation package to the structure surfaces of a vehicle with the aid of fasteners.

Insulation packages of this type are attached to the frames of the aircraft fuselage structure by means of fasteners which are typically made of plastic(s), for example, polyamide. The typical insulation systems, which comprise glass wool and simple plastic films, may have a burn-through time of approximately sixty seconds.

In case of fire in an aircraft parked on the ground, i.e. the "post-crash fire scenario", burning kerosene may cause the aluminum cells of the aircraft structure and even the fuselage insulation (internal insulation) of the aircraft to burn through. There is always a desire to increase the burn trough time, or to increase the time the structure may withstand the fire.

As mentioned above, typical fasteners of the insulation are made of non-metallic materials (plastics), which are usually not able to resist the fire in case of catastrophe for an extended period of time. Due to this, a collapse of the burning insulation (insulation packages) may occur, because of which uncontrollable obstructions or other fire danger points would (suddenly) be present.

WO 00/75012 A 1 discloses a fuselage insulation for an aircraft fuselage which is specified as "fire-blocking". This publication discloses an insulation package which is positioned as the primary insulation within a spatial region which lies between the fuselage internal paneling and the fuselage external skin. In this case, this insulation package is protected in areas by a film made of fire-blocking material. This fire-blocking film region is directly facing toward the external skin of the aircraft fuselage (as a type of fire protection shield). Neglecting the fact that only insufficient protection of the insulation package and also the fuselage internal region from occurring fire may be provided using this suggestion, since during a fire catastrophe the flames of fire may pass from outside the aircraft through a damaged external skin and may feed on the internal insulation, i.e., would pass through the (only) fire-blocking, but not fire-resistant film upon permanent fire strain, the intended regional positioning of an only fire-blocking film may not be able to ensure fire protection safety in relation to the fuselage inside region for an extended period of time.

### SUMMARY OF THE INVENTION

According to an exemplary embodiment of the present invention, an insulation structure for the internal insulation of a vehicle is provided, which comprises an insulation package, implemented using an insulation, and a film, which is positioned inside an intermediate space that includes internal paneling and an external skin of the vehicle. According to an aspect of the present invention, the insulation package is implemented homogeneously using a first (burn-through safe) insulation, which insulation material is burn-through safe.

It is believed that according to this exemplary embodiment of the present invention, an insulation structure of a vehicle may be provided, which may be used for internal insulation, in such a way that a fire overlap of the flames of a source of fire acting from outside the vehicle surroundings into the vehicle interior is excluded or prevented for an extended period of time. This may allow for an increase of the fire protection safety for separate interior regions lying near a structure external skin being implemented through intentional modifications of a typical insulation assembly.

### BRIEF DESCRIPTION OF THE DRAWING

The present invention is described in greater detail in exemplary embodiments on the basis of the attached drawing.
- Figure 1: shows an insulation structure for the internal insulation of a commercial aircraft having a burn-through safe film envelope of the insulation assembly;
- Figure 2: shows a film-enveloped insulation structure for the internal insulation of a commercial aircraft having a burn-through safe insulation;
- Figure 3: shows a film-enveloped insulation structure for the internal insulation of a commercial aircraft having an insulation assembly constructed from two distinct insulation regions;
- Figure 4: shows a film-enveloped insulation structure for the internal insulation of a commercial aircraft having an insulation assembly comprising three insulation regions and constructed from two distinct insulation regions;
- Figure 5: shows a film-enveloped insulation structure for the internal insulation of a commercial aircraft having a burn-through unsafe insulation comprising two barrier layers.

### DETAILED DESCRIPTION OF EXEMPLARY EMBODIMENTS

It is assumed that the insulation structure specified in the following, which is used for the internal insulation of a (generally identified) vehicle and especially an aircraft, comprises an insulation assembly 3 and a (generally specified) film, the insulation assembly 3 considering a (generally specified) insulation which is shaped into a package. The insulation assembly is typically enveloped by the film in order to provide a type of internal support to the insulation (for whatever reasons) and ensure maintenance of the desired assembly shape of the insulation assembly 3. This insulation structure is positioned inside an intermediate space, which is enclosed between a fuselage internal paneling and a fuselage external skin of an aircraft, for example.

In order to make the above-mentioned illustration more understandable for the observer, it is additionally noted that in the strength bracing of the aircraft fuselage, the latter has, in addition to the stringers with which all external skin panels of an aircraft fuselage structure are stiffened, multiple frames, which are positioned perpendicularly to the aircraft longitudinal axis (not shown) at (approximately) a defined interval and attached to the stringers. These frames may be integrated at the unattached end of a frame girder, which is extended parallel to the aircraft longitudinal axis, the (unattached free) end of the frame girder being angled perpendicularly to the aircraft longitudinal axis, for example. In this case, this insulation structure, i.e., the film-enveloped insulation assembly 3, is laid at or near the fuselage external skin and/or an external skin section of the fine length (along a fuselage longitudinal axis) on stringers and attached to frames positioned in intervals (of the defined length).

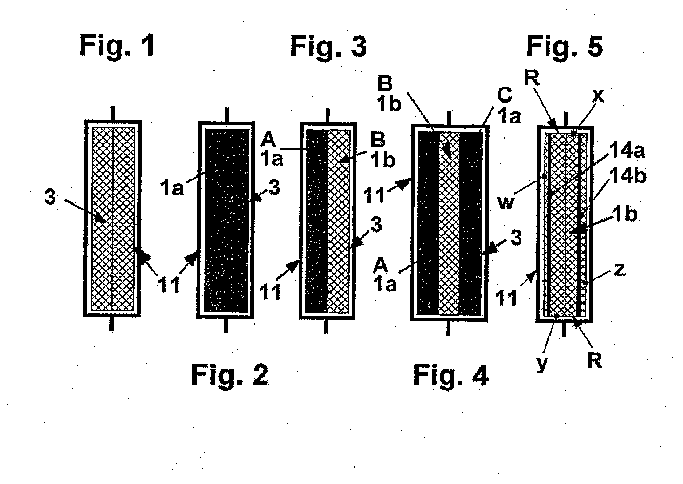

The illustration in Figure 1 also shows that solely the installation of a insulation package 3, which is essentially completely enveloped by a burn-through safe film 11, may be sufficient to achieve effective fire protection against the flame of a fire or to increase the fire withstanding time of the respective structure.

In this case, the insulation structure considers an insulation package 3 that considers (only) one second insulation 1b, which is constructed using a burn-through unsafe insulation material, this insulation structure already causing effective fire protection against the flames of the fire which would act on the insulation structure - especially on the external region of the film surface. This second insulation 1b of the insulation package 3 is used as a fire barrier.

In order to achieve a further elevation (increase) of the fire protection safety for separated interior regions lying near a structure external skin, further modifications of an insulation package 3 will be suggested, which may be inferred from the illustrations in Figures 2 through 5.

The embodiment in Figure 2 considers an insulation package 3 which is implemented homogeneously (completely, entirely) using a first (burn-through safe) insulation 1a, whose insulation material is burn-through safe. This insulation 1a is specified with a burn-through safe material which will be specified in more detail at the end of the explanation of all embodiments of an insulation package 3.

The film protection of the insulation package, which considers a burn-through -safe material, is a prophylactic implementation (in comparison to the insulation structure in Figure 1) of an increase of the burn safety from fire acting (unfavorably) from outside the aircraft fuselage in the case of a fire catastrophe, but is more cost-intensive.

The embodiments in Figures 3 and 4, which certainly appear very similar, assume that the insulation package 3 is constructed having distinct insulation regions A, B, C, a variation of the thickness of the individual first insulation regions A, C-certainly influencing (for the above-mentioned purpose) an improvement of the fire safety of the insulation package 3. According to the pattern in Figure 4, these insulation regions A, B, C are positioned along a finite series, and are laid next to one another in alternating sequence, for example, in the sequence: "first insulation region A - middle insulation region B - final insulation region C". The insulation regions A, C are implemented using a first insulation 1a (except for the insulation region terminating the series), whose insulation material is burn-through safe. A second insulation region B, which is positioned along the series next to the insulation regions A, C with burn-through safe insulation material neighboring (interposed), is equipped with a second insulation 1b, whose insulation material is burn-through unsafe (fire endangered, flammable). The construction of the insulation package 3 is designed so that a first insulation region A and an insulation region terminating the series are implemented using the insulation material of the first insulation 1a, i.e., using a burn-through safe insulation, which is used as a fire barrier.

Figure 3 shows a special form of the insulation structure in Figure 4, which- in comparison to the illustration in Figure 4 - dispenses with the proximal positioning of a third insulation region C (terminating the series). In this arrangement, the first insulation region A having the burn-through safe insulation material faces toward the external skin, if one wishes to achieve an effective fire protection against the flames of a fire toward the outside of the aircraft.

Figure 4 shows an exemplary sequence of the above-mentioned structure, i.e., a second insulation region B, which is implemented using the burn-through unsafe insulation material of the second insulation 1b, is laid next to each of a first and a third insulation region A, C, which is equipped with the burn-through safe insulation material of the first insulation 1a.

As noted, it is generally intended that in each case a further burn-through unsafe insulation region, which corresponds to the pattern of the second insulation region B, is always continued following the third insulation region C and each further insulation region corresponding to the pattern of the first insulation 1b, until reaching the final (burn-through safe) insulation region at the end of the series.

The embodiment in Figure 5 assumes that the insulation package 3 is implemented integrally with a second insulation 1b [an identical insulation], whose insulation material is burn-through unsafe (fire endangered, flammable), but multiple burn-through safe barrier layers 14a, 14b which are used as fire barriers, are integrated.

In the specific case, it may be intended that only one burn-through safe barrier layer 14a or 14b is integrated in the second insulation 1b as a fire barrier. In this case, the single barrier layers 14a, 14b would run without interruption through the second insulation 1b, leading up to the peripheral edge R (up to the circumference) of the second insulation 1 b. In this case (according to the pattern of Figure 5) the vertical course of the single barrier layers 14a, 14b would be delimited by two boundary faces x, y of the second insulation 1b, which are positioned horizontally and are vertically diametrically opposing. The single barrier layers 14a, 14b would thus run near the boundary faces w, z or otherwise the relevant end of the single barrier layers 14a, 14b would press against the two boundary faces w, z.

The closed (uninterrupted) course of the barrier layers 14a, 14b through the second insulation 1b is implemented in a straight line according to the pattern of Figure 5, a zigzagged or curved course (for whatever reasons) otherwise also being conceivable. If a curved course of the single barrier layer 14a, 14b is intended, this course may be designed as sinusoidal or cosinusoidal.

It is also to be noted that further embodiments of the insulation structure in Figure 5 may consider the further arrangement of barrier layers 14a or 14b positioned at an interval and implemented in a straight line. An insulation structure according to Figure 5, which only considers one single barrier layer 14a, 14b, would also be entirely conceivable. In this case, the thickness of the barrier layer 14, 14a and its differentiated positioning within the structure presented (according to Figure 5) would be a function of the specified conditions (weight, selection of the layer material (specified in the following), fire protection safety required by the airliner, etc.).

All embodiments of a layered structure in Figures 2 through 5 may have the following shared features.

The first and the second insulations 1a, 1b or the insulation regions A, B, C (including further positioned insulation regions) or the barrier layers 14a, 14b (including further positioned barrier layers) are situated in a position approximately parallel to the external skin of a (generally identified) vehicle or (especially) parallel to the fuselage external skin of an aircraft. An approximately parallel position indicates the presence of similar positions of these elements to the external skin.

Accordingly, it may be that the vertical position of the insulations 1a, 1b or the insulation regions A, B, C (including further positioned insulation regions) or the barrier layers 14a, 14b (including further positioned barrier layers) is tailored to the contour (to the outline) or to the curvature of the external skin (fuselage external skin of an aircraft).

The cited film 11, the first insulation 1a, and the barrier layers 14a, 14b (including further positioned barrier layers) are implemented using a material of high fire resistance, which is implemented as sufficiently resistant and/or insensitive to occurring fire, because of which propagation of the fire, which will flame against a surface region of the barrier layer in this situation, is prevented.

In this case, the first insulation 1a and/or the barrier layers 14a, 14b (including further positioned barrier layers) are implemented using a fireproof fibrous material.

The fibrous material is implemented using ceramic, carbon, or silicate fibers.

It is also to be noted that the insulation package 3 is essentially completely enveloped by the burn-through safe film 11, through which additional elevation of the fire protection safety is achieved. The insulations 1a, 1b or the insulation regions A, B, C (including further positioned insulation regions) shown in Figures 2 through 4 are completely enveloped by the film 11. The second insulation 1b in Figures 1 and 5, including the barrier layers 14a, 14b in Figure 5, is completely enveloped by the film 11. In the special case in Figure 1, this fire protection safety of the insulation structure is first implemented by the installation of the film 11.

Finally, the use of the first insulation 1a and the barrier layers 14a, 14b (including further positioned barrier layers) is noted, which, as a fire barrier or fire barricade, would offer a type of protective shield against the fire acting from outside the vehicle and penetrating in the direction of the vehicle interior and through the (damaged or burned through) external skin in case of a fire catastrophe.

### List of reference numbers

- 1:
- 1a: first insulation, burn-through safe
- 1b: second insulation, burn-through unsafe
- 2:
- 3: insulation package
- 4:
- 5:
- 6:
- 7:
- 8:
- 9:
- 10:
- 11: film

- 14a: barrier layer, burn-through safe
- 14b: barrier layer, burn-through unsafe
- w: boundary face (of the second insulation 1b), positioned vertically
- x: boundary face (of the second insulation 1b), positioned horizontally
- y: boundary face (of the second insulation 1b), positioned horizontally
- z: boundary face (of the second insulation 1b), positioned vertically
- A: first insulation region, burn-through safe
- B: second insulation region, burn-through unsafe
- C: third insulation region, burn-through safe
- R: peripheral edge (of the second insulation 1b)

## Claims

1. An insulation structure for the internal insulation of a vehicle, which comprises an insulation package (3), implemented using an insulation, and a film (11), which in use is positioned inside an intermediate space that includes internal paneling and an external skin of the vehicle,
**characterized in that** the insulation package (3) is constructed using distinct insulation regions (A, B, C), which are implemented using a first insulation (1a), which insulation material is burn-through safe, and a second insulation (1b), which insulation material is burn-through unsafe, these insulation regions being positioned along a finite series and laid next to one another up to a final insulation region (A, B, C), wherein the insulation material is exchanged in alternating sequence.

2. An insulation structure for the internal insulation of a vehicle, which comprises an insulation package (3), implemented using an insulation, and a film (11), which in use is positioned inside an intermediate space that includes internal paneling and an external skin of the vehicle,
**characterized in that** the insulation package (3) is implemented homogeneously using a second insulation (1b), which insulation material is burn-through unsafe, in which multiple burn-through safe barrier layers (14a, 14b) are integrated.

3. The insulation structure of claim 1,
wherein a first insulation region (A) and an insulation region terminating the series are implemented using the insulation material of the first insulation (1a).

4. The insulation structure of claim 1,
wherein a second insulation region (B), which is implemented using the burn-trough unsafe insulation material of the second insulation (1b), is laid next to each of a first and a third insulation region (A, C), which are equipped with the burn-through safe insulation material of the first insulation (1a), and following the third and each further insulation region (A, C), which are equipped with the burn-through safe insulation material of the first insulation (1a), a further insulation region (B) is positioned, which is equipped with the burn-through unsafe insulation material of the second insulation (1b).

5. The insulation structure of claim 2,
wherein the single barrier layers (14a, 14b) lead without interruption through the second insulation (1b) and up to the peripheral edge (R) of the second insulation (1b).

6. The insulation structure of claim 2,
wherein the vertical course of the single barrier layers (14a, 14b) is delimited by two vertically diametrically opposed and horizontally positioned boundary faces (x, y) of the second insulation (1b).

7. The insulation structure of claim 2,
wherein the single barrier layers (14a, 14b) lead close to or press against the two boundary faces (w, z) of the second insulation (1b), which are horizontally diametrically opposing and vertically positioned.

8. The insulation structure of claim 2,
wherein uninterrupted course of the barrier layers (14a, 14b) is implemented by the second insulation (1b), which is implemented as straight or zigzagged or curved.

9. The insulation structure of claim 8,
wherein the curved course of the single barrier layer (14a, 14b) is designed as sinusoidal or cosinusoidal.

10. The insulation structure of claims 1 or 2,
wherein the first (1a) and the second (1b) insulation or the insulation regions of the barrier layers (14a, 14b) are situated in a position approximately parallel to the external skin.

11. The insulation structure of claims 1 or 2,
wherein the vertical position of the insulations (1a, 1b) or the insulation regions (A, B, C) or the barrier layers (14a, 14b) is tailored to the contour or the curvature of the external skin.

12. The insulation structure of claims 1 or 2,
wherein the film (11), the first insulation (1a), or the barrier layers (14a, 14b) are implemented using a material of high fire resistance, which is implemented as sufficiently resistant and/or insensitive to occurring fire, because of which propagation of the fire, which would flame against a surface region of the barrier layer in this situation, is prevented.

13. The insulation structure of claim 12,
wherein the first insulation (1a) or the barrier layers (14a, 14b) are implemented using a fireproof fibrous material.

14. The insulation structure of claim 13,
wherein the fibrous material is implemented using ceramic, carbon, or silicate fibers.

15. The insulation structure of claims 1 or 2,
wherein the insulation package (3) is completely enveloped by the film (11).

16. The insulation structure of claims 1 or 2,
wherein the insulations (1a, 1b) or the insulation regions (A, B, C) are completely enveloped by the film (11).

17. The insulation structure of claims 2 and 16,
wherein the second insulation (1b), including the barrier layers (14a; 14b), is completely enveloped by the film (11).

18. The insulation structure of claims 1 or 2,
wherein a use of the first insulation (1a) or the barrier layers (14a, 14b) as a fire barrier is considered.

## Patentansprüche

1. Ein Isolationsaufbau für die Innenisolierung eines Fahrzeugs, der ein Isolierpaket (3), das unter Nutzung einer Isolierung realisiert ist, und eine Folie (11) umfasst, welcher bei Verwendung innerhalb eines Zwischenraums angeordnet ist, den eine Innenverkleidung und eine Außenhaut des Fahrzeugs einschließt,
**dadurch gekennzeichnet, dass**
das Isolierpaket (3) unter Verwendung unterschiedlicher Isolierbereiche (A, B, C) aufgebaut ist, die realisiert sind unter Nutzung einer ersten Isolierung (1a), deren Isolierwerkstoff durchbrandsicher ist, und einer zweiten Isolierung (1b), deren Isolierwerkstoff durchbrandunsicher ist, wobei diese Isolierbereiche entlang einer endlichen Reihe angeordnet und nebeneinander gelegen sind, bis zu einem abschließenden Isolierbereich (A, B, C), wobei der Isolierwerkstoff in abwechselnder Reihenfolge getauscht ist.

2. Ein Isolationsaufbau für die Innenisolierung eines Fahrzeugs, der ein Isolierpaket (3), das unter Nutzung einer Isolierung realisiert ist, und eine Folie (11) umfasst, welcher bei Verwendung innerhalb eines Zwischenraums angeordnet ist, den eine Innenverkleidung und eine Außenhaut des Fahrzeugs einschließt,
**dadurch gekennzeichnet, dass**
das Isolierpaket (3) einheitlich unter Verwendung einer zweiten Isolierung (1b) realisiert ist, deren Isolierwerkstoff durchbrandunsicher ist, in den mehrere durchbrandsichere Sperrschichten (14a, 14b) integriert sind.

3. Der Isolationsaufbau nach Anspruch 1,
wobei ein erster Isolierbereich (A) und ein die Reihe abschließender Isolierbereich mit dem Isolierwerkstoff der ersten Isolierung (1a) realisiert sind.

4. Der Isolationsaufbau nach Anspruch 1,
wobei ein zweiter Isolierbereich (B), der mit dem durchbrandunsicheren Isolierwerkstoff der zweiten Isolierung (1b) realisiert ist, jeweils einem ersten und einem dritten Isolierbereich (A, C), die mit dem durchbrandsicheren Isolierwerkstoff der ersten Isolierung (1a) ausgestattet sind, nebengelegen ist, und nachfolgend dem dritten und jedem weiteren Isolierbereich (A, C), der mit dem durchbrandsicheren Isolierwerkstoff der ersten Isolierung (1a) ausgestattet ist, jeweils ein weiterer Isolierbereich (B) angeordnet ist, der mit dem durchbrandunsicheren Isolierwerkstoff der zweiten Isolierung (1b) ausgestattet ist.

5. Der Isolationsaufbau nach Anspruch 2,
wobei die einzelnen Sperrschichten (14a, 14b) ohne Unterbrechung durch die zweite Isolierung (1b), und bis an umfänglichen Rand (R) der zweiten Isolierung (1b) führen.

6. Der Isolationsaufbau nach Anspruch 2,
wobei der vertikale Verlauf der einzelnen Sperrschichten (14a, 14b) durch zwei vertikal diametral entgegengesetzte und horizontal angeordnete Randflächen (x, y) der zweiten Isolierung (1b) begrenzt ist.

7. Der Isolationsaufbau nach Anspruch 2,
wobei die einzelnen Sperrschichten (14a, 14b) bis nahe an oder drückend gegen die beiden Randflächen (w, z) der zweiten Isolierung (1b) geführt sind, die horizontal gegenüberstehend und vertikal angeordnet sind.

8. Der Isolationsaufbau nach Anspruch 2,
wobei ein ununterbrochener Verlauf der Sperrschichten (14a, 14b) durch die zweite Isolierung (1b) realisiert ist, der geradlinig oder zick-zack-förmig oder kurvenförmig ausgeführt ist.

9. Der Isolationsaufbau nach Anspruch 8,
wobei der kurvenförmige Verlauf der einzelnen Sperrschicht (14a, 14b) sinusförmig oder kosinusförmig gestaltet ist.

10. Der Isolationsaufbau nach Anspruch 1 oder 2,
wobei die erste (1a) und die zweite (1b) Isolierung oder die Isolierbereiche der Sperrschichten (14a, 14b) in einer annähernd parallel zu der Außenhaut befindlichen Lage angeordnet sind.

11. Der Isolationsaufbau nach Anspruch 1 oder 2,
wobei die vertikale Lage der Isolierungen (1a, 1b) oder der Isolierbereiche (A, B, C) oder der Sperrschichten (14a, 14b) an die Kontur oder die Krümmung der Außenhaut angepasst ist.

12. Der Isolationsaufbau nach Anspruch 1 oder 2,
wobei die Folie (11), die erste Isolierung (1a), oder die Sperrschichten (14a, 14b) unter Verwendung eines Werkstoffes von hoher Feuerfestigkeit realisiert sind, der als ausreichend widerstandsfähig und/oder unempfmdlich gegen auftretendes Feuer ausgebildet ist, weswegen eine Ausbreitung des Feuers, das in dieser Situation gegen einen Oberflächenbereich der Sperrschicht flammen würde, verhindert wird.

13. Der Isolationsaufbau nach Anspruch 12,
wobei die erste Isolierung (1a) oder die Sperrschichten (14a, 14b) unter Verwendung eines feuerfesten Fasermaterials ausgeführt sind.

14. Der Isolationsaufbau nach Anspruch 13,
wobei das Fasermaterial mit Keramik-, Karbon- oder Silikatfasern realisiert ist.

15. Der Isolationsaufbau nach Anspruch 1 oder 2,
wobei das Isolationspaket (3) vollständig von der Folie (11) umhüllt ist.

16. Der Isolationsaufbau nach Anspruch 1 oder 2,
wobei die Isolierungen (1a, 1b) oder die Isolierbereiche (A, B, C) vollständig von der Folie (11) eingehüllt sind.

17. Der Isolationsaufbau nach Anspruch 2 und 16,
wobei die zweite Isolierung (1b), einschließlich der Sperrschichten (14a, 14b) vollständig durch die Folie (11) umhüllt ist.

18. Der Isolationsaufbau nach Anspruch 1 oder 2,
wobei eine Verwendung der ersten Isolierung (1a) oder der Sperrschichten (14a, 14b) als eine Feuerbarriere berücksichtigt ist.

## Revendications

1. Structure d'isolation pour l'isolation interne d'un véhicule, qui comprend un module d'isolation (3), mis en oeuvre par utilisation d'une isolation, et un film (11), lequel, en utilisation, est positionné à l'intérieur d'un espace intermédiaire qui inclut un panneau interne et une peau externe du véhicule, **caractérisée en ce que** le module d'isolation (3) est construit par utilisation de régions d'isolation distinctes (A, B, C), lesquelles sont mises en oeuvre par utilisation d'une première isolation (1a), dont le matériau isolant est résistant au percement par le feu, et d'une seconde isolation (1b), dont le matériau isolant n'est pas résistant au percement par le feu, ces régions d'isolation étant positionnées sur une série limitée et placées les unes à côté des autres jusqu'à une région d'isolation finale (A, B, C), le matériau isolant étant remplacé selon une séquence alternante.

2. Structure d'isolation pour l'isolation interne d'un véhicule, qui comprend un module d'isolation (3), mis en oeuvre par utilisation d'une isolation, et un film (11), lequel, en utilisation, est positionné à l'intérieur d'un espace intermédiaire qui inclut un panneau interne et une peau externe du véhicule, **caractérisée en ce que** le module d'isolation (3) est mis en oeuvre de manière homogène par utilisation d'une seconde isolation (1b) dont le matériau isolant n'est pas résistant au percement par le feu, dans lequel de multiples couches barrières résistantes au percement par le feu (14a, 14b) sont intégrées.

3. Structure d'isolation selon la revendication 1,
dans laquelle une première région d'isolation (A) et une région isolante terminant la série sont mises en oeuvre par utilisation du matériau isolant de la première isolation (1a).

4. Structure d'isolation selon la revendication 1,
dans laquelle une seconde région d'isolation (B), qui est mise en oeuvre par utilisation du matériau isolant non résistant au percement par le feu de la seconde isolation (1b), est placée à côté de chaque première et troisième région isolante (A, C) qui sont équipées du matériau isolant résistant au percement par le feu de la première isolation (1a), et à la suite de la troisième et chaque autre région d'isolation (A, C) qui sont équipées du matériau isolant résistant au percement par le feu de la première isolation (1a), une autre région d'isolation (B) est positionnée, laquelle est équipée du matériau isolant résistant au percement par le feu de la seconde isolation (1b).

5. Structure d'isolation selon la revendication 2,
dans laquelle les seules couches barrières (14a, 14b) conduisent sans interruption au travers de la seconde isolation (1b) et jusqu'au bord périphérique (R) de la seconde isolation (1b).

6. Structure d'isolation selon la revendication 2,
dans laquelle la course verticale des seules couches barrières (14a, 14b) est délimitée par deux faces frontières (x, y) de la seconde isolation (1b) qui sont positionnées horizontalement et verticalement de manière diamétralement opposée.

7. Structure d'isolation selon la revendication 2,
dans laquelle les seules couches barrières (14a, 14b) conduisent à proximité des deux faces frontières (w, z) de la seconde isolation (1b) ou sont pressées contre celles-ci, ces deux faces étant positionnées verticalement et horizontalement de manière diamétralement opposée.

8. Structure d'isolation selon la revendication 2,
dans laquelle une course ininterrompue des couches barrières (14a, 14b) est mise en oeuvre par la seconde isolation (1b) qui est mise en oeuvre sous une forme droite, en zigzag ou courbée.

9. Structure d'isolation selon la revendication 8,
dans laquelle la course courbée de la seule couche barrière (14a, 14b) est conçue sous une forme sinusoïdale ou cosinusoïdale.

10. Structure d'isolation selon les revendications 1 ou 2,
dans laquelle la première (1a) et la seconde (1b) isolation ou les régions d'isolation des couches barrières (14a, 14b) sont situées dans une position approximativement parallèle à la peau externe.

11. Structure d'isolation selon les revendications 1 ou 2,
dans laquelle la position verticale des isolations (1a, 1b) ou des régions d'isolation (A, B, C) ou des couches barrières (14a, 14b) est personnalisée au contour ou à la courbure de la peau externe.

12. Structure d'isolation selon les revendications 1 ou 2,
dans laquelle le film (11), la première isolation (1a), ou les couches barrières (14a, 14b) sont mis en oeuvre par utilisation d'un matériau ayant une haute résistance au feu, lequel est mis en oeuvre sous une forme suffisamment résistante et/ou insensible à la survenue d'un feu et grâce auquel la propagation du feu, qui flamberait contre une région de surface de la couche barrière dans cette situation, est empêchée.

13. Structure d'isolation selon la revendication 12,
dans laquelle la première isolation (1a) ou les couches barrières (14a, 14b) sont mises en oeuvre par utilisation d'un matériau fibreux résistant au feu.

14. Structure d'isolation selon la revendication 13,
dans laquelle le matériau fibreux est mis en oeuvre par utilisation de fibres céramiques, de carbone ou de silicate.

15. Structure d'isolation selon les revendications 1 ou 2,
dans laquelle le module d'isolation (3) est complètement enveloppé par le film (11).

16. Structure d'isolation selon les revendications 1 à 2,
dans laquelle les isolations (1a, 1b) ou les régions d'isolation (A, B, C) sont complètement enveloppées par le film (11).

17. Structure d'isolation selon les revendications 2 et 16,
dans laquelle la seconde isolation (1b), comprenant les couches barrières (14a, 14b), est complètement enveloppée par le film (11).

18. Structure d'isolation selon les revendications 1 ou 2,
dans laquelle une utilisation de la première isolation (1a) ou des couches barrières (14a, 14b) sous forme de barrière incendie est considérée.
